# EUROPÄISCHE PATENTSCHRIFT

(11) **EP 1 902 912 B1**
(45) Veröffentlichungstag und Bekanntmachung des Hinweises auf die Patenterteilung: **31.10.2012**
(21) Anmeldenummer: 07115898.4
(22) Anmeldetag: 07.09.2007
(51) Int. Cl.: B60R 25/00, G07C 9/00

(54) **Kraftfahrzeug mit einer Sensoranordnung**
Motor vehicle with a sensor assembly
Véhicule automobile doté d'un dispositif de détection

(30) Priorität: 20.09.2006 DE 102006044112
(43) Veröffentlichungstag der Anmeldung: 26.03.2008
(73) Patentinhaber: Hella KGaA Hueck & Co., 59552 Lippstadt (DE)
(72) Erfinder: Olk, Joachim, 59558 Lippstadt (DE); Weghaus, Ludger, 59556 Lippstadt (DE); Marx, Bernhard, 59590 Geseke (DE)
(74) Vertreter: Downar, Michael

(56) Entgegenhaltungen:
- EP-A- 1 143 092
- EP-A- 1 659 542
- EP-A- 1 808 820
- WO-A-98/20364
- WO-A-2006/024399
- DE-A1- 10 003 607
- DE-A1- 10 004 523
- US-A- 5 929 769
- US-A1- 2001 054 952

## Beschreibung

Die Erfindung betrifft ein Kraftfahrzeug mit einer Sensoranordnung, die Teil eines Außenbereichs des Kraftfahrzeugs auf Anwesenheit eines Körperteils eines Benutzers oder eines Gegenstands überwacht.

Aus der Druckschrift mit der Veröffentlichungsnummer DE 10 2004 055 982 A1 ist die Verwendung eines Ultraschallsensors bekannt, der in der Nähe der Nummernschildbeleuchtung angeordnet ist. Der Sensor ist so ausgerichtet, dass der Ultraschallstrahl hauptsächlich von oben nach unten gerichtet ist. Die beschriebene Ausrichtung des Sensors ergibt sich aus Gründen der Vermeidung beziehungsweise Verringerung von Schmutzeffekten zum Beispiel durch Regen oder Schnee. Der Ultraschallsensor ist Teil eines Schließsystems für ein Fahrzeug, das eine Steuereinheit aufweist, mit der Schließelemente zur Entriegelung, Verriegelung, Öffnung, Schließung und/oder Aktivierung oder Deaktivierung von Fahrzeugöffnungsvorrichtungen angesteuert werden kann. In Abhängigkeit von einer Bewegung oder von dem Einbringen eines Gegenstands oder Körperteils, zum Beispiel einer Hand, in den Erfassungsbereich des Sensors, können die Schließelemente des Schließsystems betätigt werden. Der Körperteil, welcher in den Erfassungsbereich des Sensors gebracht wird, um das Kraftfahrzeug zu entriegeln, ist üblicher Weise die Hand, da der Sensor so hoch am Kraftfahrzeug angebracht ist, dass eine Bedienung mit einem Fuß oder dergleichen nicht optimal möglich ist.

Die Betätigung oder Auslösung der Schließelemente zum Entriegeln oder Verriegeln oder Öffnen oder Schließen eines Kofferraumdeckels ist jedoch immer dann von Nachteil, wenn der Bediener einen oder mehrere Gegenstände in beiden Händen hält, die er in den Kofferraum einlegen oder aus diesem herausnehmen möchte. Um mit der Hand in den Erfassungsbereich zu kommen, müsste der Bediener eine Hand frei machen.

Das gleiche trifft beispielsweise für das Öffnen und Schließen von Schiebetüren zu.

Aus der Druckschrift mit der Veröffentlichungsnummer EP 1 808 820 A1 ist es nun bekannt, an einem Kraftfahrzeug eine Sensoreinrichtung anzubringen, die eine Fußbewegung eines Benutzers erfasst, um dadurch das selbsttätige Durchführen eines Öffnungsvorgangs und/oder eines Schließvorgangs des Kraftfahrzeugs auszulösen, ohne dass dazu ein Schlüssel betätigt oder bedient werden muss. Die Sensoreinrichtung ist so angebracht und ausgerichtet, dass ein Teil eines Beins oder Fußes eines neben dem Kraftfahrzeug stehenden Benutzers durch eine einfache Körperbewegung, zum Beispiel eine Bewegung des Beins oder des Fußes in den von der Sensoranordnung überwachten Teil des Außenbereichs des Kraftfahrzeugs bringbar ist. Eine ähnliche Einrichtung ist auch aus der Druckschrift WO 2006/024399 A1 bekannt.

Eine Sensoreinrichtung, wie sie in der erstgenannten Druckschrift beschrieben ist, wird vorzugsweise an verschiedenen Stellen des Autos angebracht, damit das Öffnen oder Schließen der verschiedenen Türen und Hauben bzw. Deckel des Kraftfahrzeugs ausgelöst werden kann beziehungsweise von verschiedenen Stellen ausgelöst werden kann. Im Regelfall dürften also drei bis fünf Sensoreinrichtungen an unterschiedlichen Stellen des Kraftfahrzeugs untergebracht sein. Während die Positionierung der Sensoreinrichtung bei der häufig benutzten Fahrertür einem Benutzer des Kraftfahrzeugs recht schnell bekannt sein dürfte, könnte dies für die anderen Türen oder Hauben beziehungsweise Deckel nicht der Fall sein. Der Benutzer des Kraftfahrzeugs muss unter Umständen durch Ausprobieren feststellen, ob er seinen Fuß in den Erfassungsbereich der Sensoreinrichtung bewegt hat. Dieses ist umständlich und kann auch zu Fehlbedienungen führen.

Der Erfindung liegt vor dem Hintergrund des Nachteils des Standes der Technik das Problem zugrunde, das Öffnen oder Schließen von Türen, Hauben oder Deckeln bei Kraftfahrzeugen komfortabler zu gestalten und Fehlbedienungen zu vermeiden. Diese Aufgabe wird erfindungsgemäß dadurch gelöst, dass der von der Sensoranordnung überwachte Teil des Außenbereichs des Kraftfahrzeugs durch ein Kennzeichnungsmittel, das auf dem Erdboden einen Lichtpunkt erzeugt, kenntlich gemacht ist.

Mit neben dem Fahrzeug Stehen ist sowohl ein seitliches Stehen des Benutzers neben dem Kraftfahrzeug als auch ein Stehen des Benutzers vor oder hinter dem Kraftfahrzeug gemeint.

Gemäß der Erfindung ist es vorteilhaft, wenn das Kraftfahrzeug eine Anordnung zur schlüssellosen Kontrolle einer Zugangs- oder Fahrberechtigung des Benutzers aufweist. Derartige Anordnungen sind aus dem Stand der Technik hinlänglich bekannt und werden auch als "passiv entry/go" oder "keyless entry/keyless go-Systeme" bezeichnet.

Gemäß der Erfindung kann ein erfindungsgemäßes Kraftfahrzeug Mittel zum Entriegeln und/oder Verriegeln einer Tür, einer Haube oder eines Deckels mittels eines Antriebs aufweisen. Derartige Mittel sind zumeist Teil einer Anordnung zur schlüssellosen Kontrolle einer Zugangs- und/oder Fahrberechtigung.

Ein erfindungsgemäßes Kraftfahrzeug kann Mittel zum Öffnen und/oder Schließen einer Tür, einer Haube oder eines Deckels des Kraftfahrzeugs mittels eines Antriebs aufweisen.

Ein erfindungsgemäßes Kraftfahrzeug kann ein Steuermittel aufweisen. Dieses Steuermittel kann vorzugsweise mit der Sensoranordnung verbunden sein und umgekehrt. Die Sensoranordnung eines erfindungsgemäßen Kraftfahrzeugs kann zum Senden eines Signals an das Steuermittel geeignet und eingerichtet sein, wenn die Sensoranordnung das Einbringen eines Gegenstands oder Körperteils in den von der Sensoranordnung überwachten Teil des Außenbereichs des Kraftfahrzeugs feststellt. Das Steuermittel eines erfindungsgemäßen Kraftfahrzeugs kann zum Aktivieren und/oder Deaktivieren der Mittel zum Entriegeln und/oder Verriegeln aufgrund eines Signals der Sensoranordnung geeignet und eingerichtet sein. Derartige Signale kann das Steuermittel auch von anderen oder weiteren Sensoranordnungen erhalten.

Gemäß der Erfindung kann das Steuermittel eines erfindungsgemäßen Kraftfahrzeugs zum Aktivieren und/oder Deaktivieren der Mittel zum Öffnen und/oder Schließen aufgrund eines Signals der Sensoranordnung geeignet und eingerichtet sein.

Ein erfindungsgemäßes Kraftfahrzeug kann Mittel zum Aus- und/oder Einklappen einer schwenkbaren Anhängerkupplung mittels eines Antriebs aufweisen. Das Steuermittel eines erfindungsgemäßen Kraftfahrzeugs kann zum Aktivieren und/oder Deaktivieren zum Aus- und/oder Einklappen der Anhängerkupplung aufgrund eines Signals der Sensoranordnung geeignet und eingerichtet sein.

Vorzugsweise ist die Sensoranordnung im Bereich einer Tür, einer Haube oder eines Deckels des Kraftfahrzeugs angebracht. Es können auch mehrere Sensoranordnungen vorgesehen sein, wobei jede Sensoranordnung einer Tür, einer Haube oder einem Deckel zugeordnet sein kann.

Ist die Sensoranordnung einer Kofferraumhaube oder einem Kofferraumdeckel zugeordnet, ist es besonders vorteilhaft, wenn die Sensoranordnung im Heckbereich des Kraftfahrzeugs angeordnet ist. Sie kann dann insbesondere oberhalb einer Unterkante eines Stoßfängers angeordnet sein.

Der von der Sensoranordnung überwachte Teil des Außenbereichs des Kraftfahrzeugs kann unter der Außenhülle des Kraftfahrzeugs liegen.

Die Sensoranordnung kann einen Bewegungssensor beliebiger Bauart aufweisen. Bei dem Sensor kann es sich um einen kapazitiven Sensor, einen Infrarotsensor oder einen anderen optischen Sensor oder einen Ultraschallsensor handeln.

Ein Verfahren zum Öffnen einer Tür, einer Haube und/oder eines Deckels eines erfindungsgemäßen Kraftfahrzeugs könnte so ausgestaltet sein, dass nach einem Authentifizieren eines Benutzers über einen ID-Geber und dem damit verbundenen Feststellen der Berechtigung des Benutzers die Mittel zum Entriegeln aktiviert werden. Nach dem Entriegeln kann dann ohne weiteren Benutzereingriff oder durch Einbringen eines Gegenstands oder Körperteils in den von der Sensoranordnung überwachten Bereich des Außenbereichs des Kraftfahrzeugs mittels des Steuermittels die Mittel zum Öffnen aktiviert werden.

Erfindungsgemäß kann ein Verfahren zum Verriegeln einer Tür, einer Haube und/oder eines Deckels eines erfindungsgemäßen Kraftfahrzeugs so ausgestaltet sein, dass nach einem Authentifizieren eines Benutzers über einen ID-Geber und dem Feststellen der Berechtigung des Benutzers die Mittel zum Verriegeln aktiviert werden. Zuvor kann durch Einbringen eines Gegenstands oder Körperteils in den von der Sensoreinrichtung überwachten Teil des Außenbereichs des Kraftfahrzeugs mittels des Steuermittels das Mittel zum Schließen von geöffneten Türen, Hauben oder Deckeln aktiviert werden.

Das Authentifizieren kann durch ein Einbringen eines Gegenstands oder Körperteils in den von der Sensoreinrichtung überwachten Teils des Außenbereichs des Kraftfahrzeugs ausgelöst werden.

Vor dem Verriegeln können die Mittel zum Verschließen von allen zumindest zum Teil geöffneten Türen, Hauben und/oder Deckel aktiviert werden.

Ein Ausführungsbeispiel für ein erfindungsgemäßes Kraftfahrzeug ist anhand der Zeichnung näher beschrieben. Es zeigt:
- Fig. 1: ein Blockschaltbild und
- Fig. 2: die Heckpartie eines Kraftfahrzeugs in schematischer Darstellung.

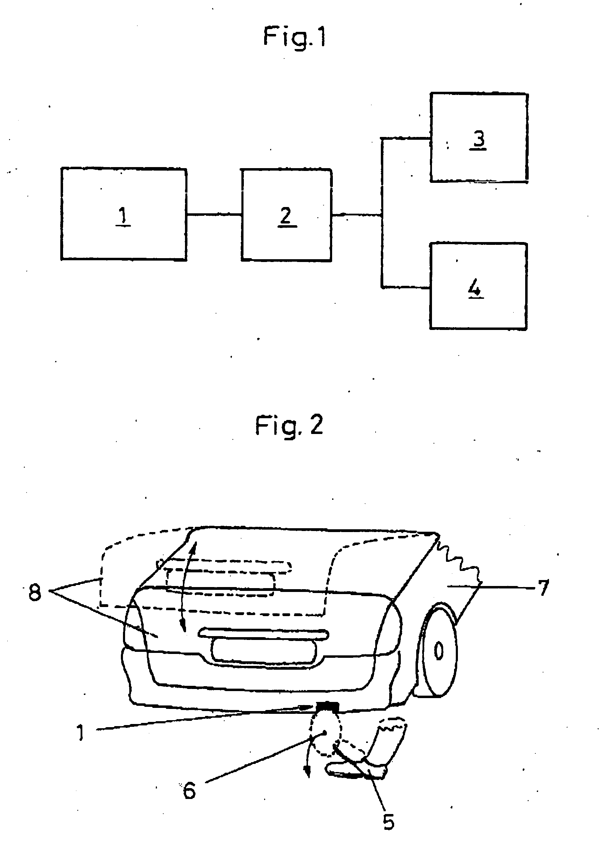

Ein erfindungsgemäßes Kraftfahrzeug 7 (Fig. 2) weist im Bereich des hinteren Stoßfängers eine Sensoranordnung 1 mit einem kapazitiven Sensor auf. Die Sensoranordnung 1 ist so an der Heckpartie des Fahrzeugs 7 angebracht, dass der Erfassungsbereich 6 des kapazitiven Sensors nach unten ausgerichtet ist. Der Erfassungsbereich 6 des Sensors beziehungsweise der Sensoranordnung 1 überwacht einen Teil des Außenbereichs des Kraftfahrzeuges 7. Durch das Ausrichten des Erfassungsbereichs 6 der Sensoranordnung 1 nach unten, ist es einem hinter dem Kraftfahrzeug 7 stehenden Benutzer durch eine einfache Körperbewegung möglich, den Fuß 5 in den Erfassungsbereich 6, d. h. an den an der Sensoranordnung 1 überwachten Teil 6 des Außenbereichs des Kraftfahrzeugs 7 zu bringen. Durch das Einbringen des Fußes in den Erfassungsbereich 6 kann bei einem erfindungsgemäßen Kraftfahrzeug 7 das Öffnen des Kofferraumdeckels 8 ausgelöst werden.

Die Sensoranordnung 1 ist mit einem Steuermittel 2 des Kraftfahrzeugs 7 verbunden. Sobald ein Gegenstand oder ein Körperteil in den Erfassungsbereich 6 der Sensoreinrichtung 1 eingebracht wird, gibt die Sensoranordnung 1 ein Signal an das Steuermittel 2. Das Steuermittel 2 ist ferner mit Mitteln 3 zum Ent- und Verriegeln des Kraftfahrzeugs und mit Mitteln 4 zum Öffnen und Schließen von Türen, Hauben und Deckeln 8 verbunden. Beide Arten von Mitteln 3, 4 können durch das Steuermittel 2 aktiviert oder deaktiviert werden.

Das erfindungsgemäße Kraftfahrzeug 7 kann zum Öffnen oder Schließen beispielsweise des Kofferraumdeckels 8 folgendermaßen benutzt werden.

Ein Benutzer, der den Kofferraumdeckel 8 öffnen möchte, nähert sich dem Kraftfahrzeug 7. Durch das Einbringen des Fußes 5 in den Erfassungsbereich 6 der Sensoreinrichtung 1 löst er die Abgabe eines Signals durch die Sensoranordnung 1 an das Steuermittel 2 aus. Er authentifiziert sich über einen mitgeführten ID-Geber auf eine bekannte Art und Weise. Das Steuermittel 2 aktiviert daraufhin die Mittel 3 zum Entriegeln des Kofferraumdeckels 8. Der Kofferraumdeckel 8 könnte nun von Hand geöffnet werden. Unmittelbar nach dem Aktivieren der Mittel 3 zum Entriegeln des Kofferraumdeckels 8 aktiviert das Steuermittel 2 jedoch die Mittel 4 zum Öffnen des Kofferraumdeckels 8. Diese Mittel 4 umfassen einen Antrieb, mit welchem der Kofferraumdeckel in eine geöffnete Stellung verschwenkt wird. Ein Eingriff des Benutzers mit den Händen zum Öffnen des Kofferraumdeckels 8 ist somit nicht notwendig. Der Benutzer kann daher in beiden Händen einen oder mehrere Gegenstände halten, ohne diese aus der Hand legen zu müssen, um den Kofferraumdeckel 8 zu öffnen. Vielmehr kann der Benutzer nach dem automatischen Öffnen des Kofferraumdeckels 8 die Gegenstände unmittelbar in den Kofferraum hereinlegen.

### Bezugszeichenliste

- 1: Sensoranordnung
- 2: Steuermittel
- 3: Mittel zum Ent- und Verriegeln
- 4: Mittel zum Öffnen und Schließen
- 5: Fuß
- 6: Erfassungsbereich
- 7: Kraftfahrzeug
- 8: Kofferraumdeckel

## Patentansprüche

1. Kraftfahrzeug mit einer Sensoranordnung (1), die Teile eines Außenbereichs des Kraftfahrzeugs (7) auf die Anwesenheit eines Körperteils (5) eines Benutzers oder eines Gegenstands überwacht, wobei die Sensoreinrichtung (1) so angebracht und ausgerichtet ist, dass ein Teil eines Beins oder Fußes (5) eines neben dem Kraftfahrzeug (7) stehenden Benutzers durch eine einfache Körperbewegung, z. B. ein Anheben und/oder Schwenken und/oder ein definiertes Bewegungsprofil beziehungsweise Bewegungsfolge des Beins oder Fußes (5) in den von der Sensoranordnung (1) überwachten Teil (6) des Außenbereichs des Kraftfahrzeugs (7) bringbar ist,
**dadurch gekennzeichnet, dass**
der von der Sensoranordnung (1) überwachte Teil (6) des Außenbereichs des Kraftfahrzeugs (7) durch ein Kennzeichnungsmittel des Kraftfahrzeugs, mit dem auf dem Erdboden einen Lichtpunkt erzeugbar ist, gekennzeichnet ist.

2. Kraftfahrzeug nach Anspruch 1, **dadurch gekennzeichnet, dass** das Kraftfahrzeug (7) eine Anordnung zur schlüssellosen Kontrolle einer Zugangs - und/oder Fahrberechtigung des Benutzers aufweist.

3. Kraftfahrzeug nach einem der Ansprüche 1 bis 2, **dadurch gekennzeichnet, dass** das Kraftfahrzeug (7) Mittel (3) zum Entriegeln und/oder Verriegeln einer Tür, einer Haube oder eines Deckels (8) mittel eines Antriebs aufweist.

4. Kraftfahrzeug nach einem der Ansprüche 1 bis 3, **dadurch gekennzeichnet, dass** das Kraftfahrzeug (7) Mittel (4) zum Öffnen und/oder Schließen einer Tür, einer Haube oder eines Deckels (8) des Kraftfahrzeugs mittels eines Antriebs aufweist.

5. Kraftfahrzeug nach einem der Ansprüche 1 bis 4, **dadurch gekennzeichnet, dass** das Kraftfahrzeug ein Steuermittel (2) aufweist.

6. Kraftfahrzeug nach Anspruch 5, **dadurch gekennzeichnet, dass** die Sensoranordnung (1) mit dem Steuermittel (2) verbunden ist.

7. Kraftfahrzeug nach Anspruch 6, **dadurch gekennzeichnet, dass** die Sensoranordnung (1) zum Senden eines Signals an das Steuermittel (2) geeignet und eingerichtet ist, wenn die Sensoranordnung (1) das Einbringen eines Gegenstandes oder Köperteils (5) in den von der Sensoranordnung (1) überwachten Teil (6) des Außenbereichs des Kraftfahrzeugs feststellt.

8. Kraftfahrzeug nach einem der Ansprüche 5 bis 7, **dadurch gekennzeichnet, dass** das Steuermittel (2) zum Aktivieren und/oder Deaktivieren der Mittel (3) zum Entriegeln und/oder Verriegeln aufgrund eines Signals der Sensoranordnung (1) geeignet und eingerichtet ist.

9. Kraftfahrzeug nach einem der Ansprüche 5 bis 8, **dadurch gekennzeichnet, dass** das Steuermittel (2) zum Aktivieren und/oder Deaktivieren der Mittel (4) zum Öffnen und/oder Schließen aufgrund eines Signals der Sensoranordnung (1) geeignet und eingerichtet ist.

10. Kraftfahrzeug nach einem der Ansprüche 1 bis 9, **dadurch gekennzeichnet, dass** das Kraftfahrzeug (7) Mittel zum Aus- und/oder Einklappen einer schwenkbaren Anhängerkupplung mittels eines Antriebs aufweist.

11. Kraftfahrzeug nach Anspruch 10, **dadurch gekennzeichnet, dass** das Steuermittel (2) zum Aktivieren und/oder Deaktivieren der Mittel zum Aus - und/oder Einklappen aufgrund eines Signals der Sensoranordnung (1) geeignet und eingerichtet ist.

12. Kraftfahrzeug nach einem der Ansprüche 1 bis 11, **dadurch gekennzeichnet, dass** die Sensoranordnung (1) im Bereich einer Tür, einer Haube oder eines Deckels (8) des Kraftfahrzeugs (7) angebracht ist.

13. Kraftfahrzeug nach einem der Ansprüche 1 bis 12, **dadurch gekennzeichnet, dass** die Sensoranordnung (1) im Heckbereich des Kraftfahrzeugs (7) angeordnet ist.

14. Kraftfahrzeug nach einem der Ansprüche 1 bis 13, **dadurch gekennzeichnet, dass** die Sensoranordnung (1) oberhalb einer Unterkante eines Stoßfängers angeordnet ist.

15. Kraftfahrzeug nach einem der Ansprüche 1 bis 14, **dadurch gekennzeichnet, dass** der von der Sensoranordnung (1) überwachte Teil (6) des Außenbereichs des Kraftfahrzeugs (7) unter der Außenhülle des Kraftfahrzeugs (7) liegt.

16. Kraftfahrzeug nach einem der Ansprüche 1 bis 15, **dadurch gekennzeichnet, dass** die Sensoranordnung (1) einen Bewegungssensor aufweist.

17. Kraftfahrzeug nach einem der Ansprüche 1 bis 16, **dadurch gekennzeichnet, dass** die Sensoranordnung (1) einen kapazitiven Sensor aufweist.

18. Kraftfahrzeug nach einem der Ansprüche 1 bis 17, **dadurch gekennzeichnet, dass** die Sensoranordnung (1) einen Infrarotsensor aufweist.

19. Kraftfahrzeug nach einem der Ansprüche 1 bis 18, **dadurch gekennzeichnet, dass** die Sensoranordnung (1) einen Ultraschallsensor aufweist.

20. Verfahren zum Öffnen einer Tür, einer Haube und/oder eines Deckels (8) eines Kraftfahrzeugs (7) nach einem der Ansprüche 4 bis 19 wobei nach einem positiv abgeschlossenen Authentifizieren eines Benutzers über einen ID-Geber die Mittel (3) zum Entriegeln aktiviert werden,
**dadurch gekennzeichnet,**
**dass** vor oder nach dem Entriegeln durch Einbringen eines Gegenstands oder Körperteils (5) in den von der Sensoranordnung (1) überwachten und durch das Kennzeichnungsmittel des Kraftfahrzeugs nach Anspruch 1 gekennzeichneten Teil (6) des Außenbereichs des Kraftfahrzeugs (7) mittels des Steuermittels (2) zumindest die dem überwachten Teil (6) des Außenbereichs zugeordneten Mittel (4) zum Öffnen aktiviert werden.

21. Verfahren zum Schließen und Verriegeln einer Tür, einer Haube und/oder eines Deckels (8) eines Kraftfahrzeugs (7) nach einem der Ansprüche 4 bis 19 wobei nach einem Authentifizieren eines Benutzers über einen ID-Geber und dem Feststellen der Berechtigung des Benutzers die Mittel (3) zum Verriegeln aktiviert werden,
**dadurch gekennzeichnet,**
**dass** vor dem Verriegeln durch Einbringen eines Gegenstands oder Körperteils (5) in den von der Sensoranordnung (1) überwachten und durch das Kennzeichnungsmittel des Kraftfahrzeugs nach Anspruch 1 gekennzeichneten Teil (6) des Außenbereichs des Kraftfahrzeugs (7) mittels des Steuermittels (2) zumindest die dem überwachten Teil (6) des Außenbereichs zugeordneten Mittel (4) zum Schließen aktiviert werden.

22. Verfahren nach Anspruch 20 oder 21, **dadurch gekennzeichnet, dass** das Authentifizieren und das Feststellen der Berechtigung durch ein Einbringen eines Gegenstands oder Körperteils (5) gegebenenfalls durch eine Bewegungsfolge des Gegenstands oder Körperteils in den von der Sensoranordnung (1) überwachten Teil (6) des Außenbereichs des Kraftfahrzeugs (7) ausgelöst wird.

23. Verfahren nach Anspruch 21, **dadurch gekennzeichnet, dass** vor dem Verriegeln die Mittel (4) zum Verschließen von allen zumindest zum Teil (6) geöffneten Türen, Hauben und Deckeln (8) aktiviert werden.

## Claims

1. Motor vehicle with a sensor arrangement (1) monitoring part of an outer area of the motor vehicle (7) for the presence of a body part (5) of a user or an object, wherein the sensor device (1) is positioned and aligned so that a part of a leg or foot (5) of a user standing next to the motor vehicle (7) can be moved in the monitored part (6) of the outer area of the motor vehicle (7) monitored by the sensor arrangement (1) by a simple body movement, e.g. a lifting and/ or swiveling and/ or a defined movement profile and/or movement sequence of the leg or the foot (5),
**characterized in that**
the part (6) of the outer area of the motor vehicle (7) monitored by the sensor arrangement (1) is **characterized by** a marking means of the motor vehicle, with which a light spot can be generated on the ground.

2. Motor vehicle according to claim 1, **characterized in that** the motor vehicle (7) has an arrangement for keyless control of access and/or driving authorization of the user.

3. Motor vehicle according to one of the claims 1 to 2, **characterized in that** the motor vehicle (7) has means (3) for the unlocking and/or locking of a door, a tailgate, a trunk-lid, a hood or a cover (8) by means of a drive.

4. Motor vehicle according to one of the claims 1 to 3, **characterized in that** the motor vehicle (7) has means (4) for the opening and/or closing of a door, a tailgate, a trunk-lid, a hood or a cover (8) of the motor vehicle by means of a drive.

5. Motor vehicle according to one of the claims 1 to 4, **characterized in that** the motor vehicle has a control means (2).

6. Motor vehicle according to claim 5, **characterized in that** the sensor arrangement (1) is connected to the control means (2).

7. Motor vehicle according to claim 6, **characterized in that** the sensor arrangement (1) is suitable and set up for the sending of a signal to the control means (2), whenever the sensor arrangement (1) detects that an object or body part (5) has been moved into the part (6) of the outer area of the motor vehicle monitored by the sensor arrangement (1).

8. Motor vehicle according to one of the claims 5 to 7, **characterized in that** the control means (2) is suitable and set up for the activation and/or deactivation of the means (3) for unlocking and/or locking by a signal of the sensor arrangement (1).

9. Motor vehicle according to one of the claims 5 to 8, **characterized in that** the control means (2) is suitable and set up for the activation and/or deactivation of the means (4) for opening and/or closing by a signal of the sensor arrangement (1).

10. Motor vehicle according to one of the claims 1 to 9, **characterized in that** the motor vehicle (7) has means for the swiveling out and/or in of a retractable trailer coupling by means of a drive.

11. Motor vehicle according to claim 10, **characterized in that** the control means (2) is suitable and set up for the activation and/or deactivation of the means for the swiveling out and/or in by a signal of the sensor arrangement (1).

12. Motor vehicle according to one of the claims 1 to 11, **characterized in that** the sensor arrangement (1) is placed in the region of a door, a tailgate, a trunk-lid, a hood or a cover (8) of the motor vehicle (7).

13. Motor vehicle according to one of the claims 1 to 12, **characterized in that** the sensor arrangement (1) is placed in the region of the tail of the motor vehicle (7).

14. Motor vehicle according to one of the claims 1 to 13, **characterized in that** the sensor arrangement (1) is placed above the lower edge of a bumper.

15. Motor vehicle according to one of the claims 1 to 14, **characterized in that** the part (6) of the outer area of the motor vehicle (7) monitored by the sensor arrangement (1) lies underneath the outer shell of the motor vehicle (7).

16. Motor vehicle according to one of the claims 1 to 15, **characterized in that** the sensor arrangement (1) has a movement sensor.

17. Motor vehicle according to one of the claims 1 to 16, **characterized in that** the sensor arrangement (1) has a capacitive sensor.

18. Motor vehicle according to one of the claims 1 to 17, **characterized in that** the sensor arrangement (1) has an infrared sensor.

19. Motor vehicle according to one of the claims 1 to 18, **characterized in that** the sensor arrangement (1) has an ultrasonic sensor.

20. Method for the opening of a door, a tailgate, a trunk-lid, a hood or a cover (8) of a motor vehicle (7) according to one of the claims 4 to 19, wherein after a positively completed authentication of a user by an ID-transmitter, the means (3) for unlocking are activated,
**characterized in that**
before or after the unlocking, by means of moving an object or a body part (5) into the part (6) of the outer area of the motor vehicle (7) monitored by the sensor arrangement (1) and marked by the marking means of the motor vehicle according to claim 1, at least the means for opening (4) assigned to the monitored part (6) of the outer area are activated for opening by the control means (2).

21. Method for the closing and locking of a door, a tailgate, a trunk-lid, a hood and/or a cover (8) of a motor vehicle (7) according to one of the claims 4 to 19, wherein after an authentication of a user by means of an ID-transmitter and the establishment of the authorization of the user, the means (3) for locking are activated,
**characterized in that**
before the locking, by means of moving an object or a body part (5) into the part (6) of the outer area of the motor vehicle (7) monitored by the sensor arrangement (1) and marked by the marking means of the motor vehicle according to claim 1, at least the means (4) assigned to the monitored part (6) of the outer area are activated for closing by the control means (2).

22. Method according to claim 20 or 21, **characterized in that** the authentication and the establishment of the authorization is triggered by moving an object or a body part (5), possibly in a sequence of movements of the object or body part, in the part (6) of the outer area of the motor vehicle (7) monitored by the sensor arrangement (1).

23. Method according to claim 21, **characterized in that** the means (4) of closing for all doors, tailgates, trunk-lids, hoods and/or covers (8) at least partly opened are activated before the locking.

## Revendications

1. - Véhicule automobile avec un agencement de capteurs (1) qui surveille la présence d'une partie du corps (5) d'un utilisateur ou d'un objet dans des parties de la zone extérieure du véhicule automobile (7), le dispositif de capteurs (1) étant monté et orienté de telle manière qu'une partie de la jambe ou du pied (5) d'un utilisateur à coté du véhicule automobile (7) par un mouvement simple du corps par exemple en soulevant et/ ou pivotant et/ ou un profil de mouvement défini respectivement une suite de mouvements définie de la jambe ou du pied (5) puisse être amenée dans la partie (6) de la zone extérieure du véhicule automobile (7) surveillée par l'agencement de capteurs (1),
**caractérisé en ce que**
la partie (6) de la zone extérieure du véhicule automobile (7) surveillée par l'agencement de capteurs (1) est marquée par un moyen de marquage du véhicule automobile avec lequel un point lumineux peut être engendré sur le sol.

2. - Véhicule automobile selon la revendication 1, **caractérisé en ce que** le véhicule automobile (7) présente un agencement pour le contrôle sans clé d'un droit d'accès et/ou droit de conduite de l'utilisateur.

3. - Véhicule automobile selon l'une des revendications 1 à 2, **caractérisé en ce que** le véhicule automobile (7) présente des moyens (3) pour le déverrouillage et/ou verrouillage d'une porte, d'un capot ou d'un couvercle de coffre (8) par le biais d'un entraînement.

4. - Véhicule automobile selon l'une des revendications 1 à 3, **caractérisé en ce que** le véhicule automobile (7) présente des moyens (4) pour l'ouverture et/ou la fermeture d'une porte, d'un capot ou d'un couvercle de coffre (8) par le biais d'un entraînement.

5. - Véhicule automobile selon l'une des revendications 1 à 4, **caractérisé en ce que** le véhicule automobile présente un moyen de commande (2).

6. - Véhicule automobile selon la revendication 5, **caractérisé en ce que** l'agencement de capteurs (1) est relié au moyen de commande (2).

7. - Véhicule automobile selon la revendication 6, **caractérisé en ce que** l'agencement de capteurs (1) est approprié et configuré à envoyer un signal au moyen de commande (2) lorsque l'agencement de capteurs (1) constate l'entrée d'un objet ou d'une partie du corps (5) dans la partie (6) de la zone extérieure du véhicule automobile surveillée par l'agencement de capteurs (1).

8. - Véhicule automobile selon l'une des revendications 5 à 7, **caractérisé en ce que** le moyen de commande (2) est approprié et configuré à activer et/ou désactiver les moyens (3) de déverrouillage et/ou verrouillage en raison d'un signal de l'agencement de capteurs (1).

9. - Véhicule automobile selon l'une des revendications 5 à 8, **caractérisé en ce que** le moyen de commande (2) est approprié et configuré à activer et/ou désactiver des moyens (4) d'ouverture et/ou de fermeture en raison d'un signal de l'agencement de capteurs (1).

10. - Véhicule automobile selon l'une des revendications 1 à 9, **caractérisé en ce que** le véhicule automobile (7) présente des moyens pour sortir et/ou rentrer un dispositif d'attelage de remorques pivotant par le biais d'un entraînement.

11. - Véhicule automobile selon la revendication 10, **caractérisé en ce que** le moyen de commande (2) est approprié et configuré à activer et/ou désactiver les moyens pour sortir et/ou rentrer en raison d'un signal de l'agencement de capteurs (1).

12. - Véhicule automobile selon l'une des revendications 1 à 11, **caractérisé en ce que** l'agencement de capteurs (1) est monté dans la zone d'une porte, d'un capot ou d'un couvercle de coffre (8) du véhicule automobile (7).

13. - Véhicule automobile selon l'une des revendications 1 à 12, **caractérisé en ce que** l'agencement de capteurs (1) est monté dans la zone de la partie arrière du véhicule automobile (7).

14. - Véhicule automobile selon l'une des revendications 1 à 13, **caractérisé en ce que** l'agencement de capteurs (1) est monté au-dessus d'un bord inférieur d'un pare-chocs.

15. - Véhicule automobile selon l'une des revendications 1 à 14, **caractérisé en ce que** la partie (6) de la zone extérieure du véhicule automobile (7) surveillée par l'agencement de capteurs (1) se trouve au-dessous de l'enveloppe du véhicule automobile (7).

16. - Véhicule automobile selon l'une des revendications 1 à 15, **caractérisé en ce que** l'agencement de capteurs (1) présente un capteur de mouvement.

17. - Véhicule automobile selon l'une des revendications 1 à 16, **caractérisé en ce que** l'agencement de capteurs (1) présente un capteur capacitif.

18. - Véhicule automobile selon l'une des revendications 1 à 17, **caractérisé en ce que** l'agencement de capteurs (1) présente un capteur à l'infrarouge.

19. - Véhicule automobile selon l'une des revendications 1 à 18, **caractérisé en ce que** l'agencement de capteurs (1) présente un capteur ultrasonore.

20. - Procédé pour l'ouverture d'une porte, d'un capot et/ou d'un couvercle de coffre (8) d'un véhicule automobile (7) selon l'une des revendications 4 à 19, les moyens (3) pour déverrouiller étant activés après une authentification positive d'un utilisateur par le biais d'un capteur d'identification,
**caractérisé en ce qu'**
avant ou après le déverrouillage au moins les moyens (4) affectés à la partie surveillée (6) de la zone extérieure sont activés pour l'ouverture par le biais du moyen de commande (2) par l'entrée d'un objet ou d'une partie du corps (5) dans la partie (6) de la zone extérieure du véhicule automobile (7) marquée par le moyen de marquage du véhicule automobile selon la revendication 1 et surveillée par l'agencement de capteurs (1).

21. - Procédé pour la fermeture et le verrouillage d'une porte, d'un capot et/ou d'un couvercle de coffre (8) d'un véhicule automobile (7) selon l'une des revendications 4 à 19, les moyens (3) pour verrouiller étant activés après une authentification d'un utilisateur par le biais d'un capteur d'identification et le constat de l'autorisation de l'utilisateur,
**caractérisé en ce qu'**
avant le verrouillage au moins les moyens (4) affectés à la partie surveillée (6) de la zone extérieure sont activés pour la fermeture par le biais du moyen de commande (2) par l'entrée d'un objet ou d'une partie du corps (5) dans la partie (6) de la zone extérieure du véhicule automobile (7) marquée par le moyen de marquage du véhicule automobile selon la revendication 1 et surveillée par l'agencement de capteurs (1).

22. - Procédé selon la revendication 20 ou 21, **caractérisé en ce que** l'authentification et le constat de l'autorisation seront déclenchés par l'entrée d'un objet ou d'une partie du corps (5) le cas échéant par une suite de mouvements de l'objet ou de la partie du corps dans la partie (6) de la zone extérieure du véhicule (7) surveillée par l'agencement de capteurs (1).

23. - Procédé selon la revendication 21, **caractérisé en ce que** les moyens (4) pour la fermeture de tous les portes, capots et couvercles de coffre (8) au moins partiellement (6) ouverts sont activés avant le verrouillage.
